# EUROPEAN PATENT SPECIFICATION

(11) **EP 2 980 403 B1**
(45) Date of publication and mention of the grant of the patent: **05.04.2017**
(21) Application number: 14180274.4
(22) Date of filing: 07.08.2014
(51) Int. Cl.: F03D 7/04, F03D 7/02

(54) **Method and system for run-time wind farm**
Verfahren und System zur Steuerung der Laufzeit einer Windenergieanlage
Procédé et système de commande d'une ferme éolienne

(30) Priority: 28.07.2014 KR 20140095629
(43) Date of publication of application: 03.02.2016
(73) Proprietor: Korea Electronics Technology Institute, Gyeonggi-do 463-816 (KR)
(72) Inventor: Kim, Tae Hyoung, Gyeonggi-do 461-830 (KR); Ham, Kyung Sun, Gyeonggi-do 446-912 (KR)
(74) Representative: Walaski, Jan Filip

(56) References cited:
- EP-A1- 2 557 311
- EP-A2- 2 849 131
- US-A1- 2013 166 082

## Description

### TECHNICAL FIELD OF THE INVENTION

The present invention relates generally to a method for controlling a wind farm and a system applying the same, and more particularly, to a method for controlling a wind farm to control wind turbines in the wind farm, and a system applying the same.

### BACKGROUND OF THE INVENTION

Wind farms are places where many wind power generators for producing energy by running generators by winds on the land or sea are installed. The wind farms have been widely studied/commercialized all over the world including Germany, U.S., Denmark, and other countries, and small-scale wind farms have been established in Korea.

The wind farm should generate and provide power demanded by a system operator, and should be run to meet the system-related standards. In addition, it is important to maximize energy production within a range allowed by the system operator.

Furthermore, it is necessary to minimize an energy production cost by minimizing a mechanical load of power generation equipments and reduce a maintenance/repair cost.

However, it is not easy to predict strength, direction, etc. of winds entering the wind power generator, and, since the wind power generators influence each other, it is not easy to predict power generated by the wind power generators.

Therefore, there is a need for a method for predicting and controlling power generated by the wind power generator. EP2557311A1 and US2013/0166082A1 relate to methods for controlling wind farms.

### SUMMARY OF THE INVENTION

To address the above-discussed deficiencies of the prior art, it is a primary aspect of the present invention to provide a method for controlling a wind farm, which measures a wind condition of a wind to enter a wind farm including a plurality of wind turbines, calculates a demanded generation quantity for each of the wind turbines to satisfy a total generation quantity based on the measured wind condition information, and controls each of the wind turbines to generate power according to the demanded generation quantity calculated for each of the wind turbines at a time corresponding to a location of each of the wind turbines, and a system applying the same.

According to one aspect of the present invention, there is provided a method for controlling a wind farm according to claim 1. According to one aspect of the present invention, a method for controlling a wind farm of a wind farm control system for controlling a plurality of wind turbines includes: measuring a wind condition of a wind to enter a wind farm including a plurality of wind turbines; calculating a demanded generation quantity for each of the wind turbines to satisfy a total generation quantity demanded of the wind farm based on the measured wind condition information; and controlling each of the wind turbines to generate power according to the demanded generation quantity calculated for each of the wind turbines at a time corresponding to a location of each of the wind turbines.

The controlling may include: an arrival time calculating operation for calculating a time when the measured wind arrives at the location of each of the wind turbines; and controlling each of the wind turbines to generate the power according to the demanded generation quantity calculated for each of the wind turbines at the time calculated for each of the wind turbines.

The arrival time calculating operation may include calculating the time when the measured wind arrives at the location of each of the wind turbines by using a distance between a point where the measuring is performed and a location of a target wind turbine, a wind speed of the measured wind, a wind speed at the location of the target wind turbine, and a measuring time of the wind.

The calculating the demanded generation quantity for each of the wind turbines may include: calculating a predicted generation quantity and a predicted load of each of the wind turbines based on the measured wind condition information; and calculating the demanded generation quantity for each of the wind turbines to satisfy the total generation quantity demanded of the wind farm based on the predicted generation quantity and the predicted load of each of the wind turbines.

The calculating the predicted generation quantity and the predicted load may include: regarding a specific wind turbine from among the plurality of wind turbines, calculating a predicted wind condition of a wind to enter the specific wind turbine by applying wake streams caused by other wind turbines to the measured wind condition information; and calculating a predicted generation quantity and a predicted load of the specific wind turbine when the wind of the predicted wind condition enters.

The calculating the predicted wind condition and the calculating the predicted generation quantity and the predicted load may be performed in parallel for each of the plurality of wind turbines.

The calculating the predicted wind condition may include: calculating a reduction coefficient by considering a wind reduced by at least one wind turbine located ahead of the specific wind turbine; and calculating the predicted wind condition of the wind to enter the specific wind turbine by applying the reduction coefficient to a strength of the measured wind.

The calculating the reduction coefficient may include, when the number of wind turbines located ahead of the specific wind turbine is N, calculating N number of partial reduction coefficients for each of the wind turbines located ahead of the specific wind turbine, and calculating the reduction coefficient for the specific wind turbine by multiplying the N number of partial reduction coefficients.

The calculating the demanded generation quantity for each of the wind turbines may include calculating the demanded generation quantity for each of the wind turbines so that a sum of the predicted generation quantities for the plurality of wind turbines equals to the total generation quantity demanded of the wind farm and a sum of the predicted loads of the plurality of wind turbines is minimized, based on the predicted generation quantity and the predicted load of each of the plurality of wind turbines.

According to another aspect of the present invention, there is provided a wind farm control system according to claim 2. According to another aspect of the present invention, a wind farm control system includes: a communication unit configured to receive wind condition information of a wind to enter a wind farm including a plurality of wind turbines; and a processor configured to calculate a demanded generation quantity for each of the wind turbines to satisfy a total generation quantity demanded of the wind farm based on the measured wind condition information, and control each of the wind turbines to generate power according to the demanded generation quantity calculated for each of the wind turbines at a time corresponding to a location of each of the wind turbines.

According to various exemplary embodiments of the present invention, a method for controlling a wind farm, which measures a wind condition of a wind to enter a wind farm including a plurality of wind turbines, calculates a demanded generation quantity for each of the wind turbines to satisfy a total generation quantity based on the measured wind condition information, and controls each of the wind turbines to generate power according to the demanded generation quantity calculated for each of the wind turbines at a time corresponding to a location of each of the wind turbines, and a system applying the same are provided. Therefore, the wind farm control system can synchronize each of the plurality of wind turbines with an appropriate time and can allocate the demanded generation quantity to each of the wind turbines.

### BRIEF DESCRIPTION OF THE DRAWINGS

For a more complete understanding of the present disclosure and its advantages, reference is now made to the following description taken in conjunction with the accompanying drawings, in which like reference numerals represent like parts:
FIG. 1 is a view illustrating a wind farm according to an exemplary embodiment of the present invention;
FIG. 2 is a view to illustrate a process of predicting a wind condition according to an exemplary embodiment of the present invention;
FIG. 3 is a view illustrating a method for allocating a demanded generation quantity according to an exemplary embodiment of the present invention;
FIG. 4 is a view to illustrate an overall process of predicting a wind condition and allocating a demanded generation quantity according to an exemplary embodiment of the present invention;
FIG. 5 is a flowchart to illustrate a method for controlling a wind farm according to an exemplary embodiment of the present invention;
FIG. 6 is a flowchart to illustrate a process of calculating a demanded generation quantity for each wind turbine according to an exemplary embodiment of the present invention;
FIG. 7 is a view to illustrate a method for calculating a reduction coefficient to apply a wake stream according to an exemplary embodiment of the present invention;
FIG. 8 is a view to illustrate a method for calculating a time corresponding to a location of a wind turbine according to an exemplary embodiment of the present invention;
FIG. 9 is a view illustrating an example of a control table of a specific wind turbine according to an exemplary embodiment of the present invention;
FIG. 10 is a view illustrating an example of a control table for each wind turbine at a specific time according to an exemplary embodiment of the present invention; and
FIG. 11 is a view illustrating a configuration of a wind farm control system according to an exemplary embodiment of the present invention.

### DETAILED DESCRIPTION OF THE INVENTION

Reference will now be made in detail to the embodiment of the present general inventive concept, examples of which are illustrated in the accompanying drawings, wherein like reference numerals refer to the like elements throughout. The embodiment is described below in order to explain the present general inventive concept by referring to the drawings.

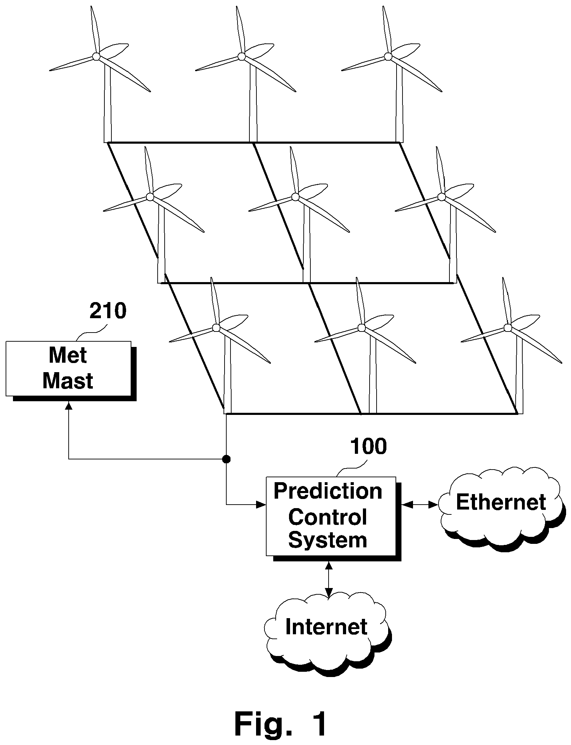

FIG. 1 is a view illustrating a wind farm to which the present invention is applicable. In FIG. 1, it is assumed that the wind farm is an offshore wind farm. However, the present invention is applicable to an onshore wind farm.

In the wind farm to which the present invention is applicable, a 'wind farm prediction control system 100' (hereinafter, referred to as a 'prediction control system 100') controls wind turbines provided in the wind farm.

Specifically, the prediction control system 100 makes an ultra-short term prediction regarding a wind condition of a wind to enter each of the wind turbines on a real time basis, and allocates a demanded generation quantity to the wind turbine based on the result of the prediction. Accordingly, the wind turbine is controlled to produce the demanded generation quantity allocated thereto.

The wind condition may include a wind speed and a wind direction, and may further include other elements regarding winds.

The process of allocating the demanded generation quantity is a process in which a system operator distributes a total generation quantity demanded of the wind farm to the wind turbines. For example, when the total generation quantity demanded of the wind farm is 100kW, the wind turbine-1 may be allocated 40kW, the wind turbine-2 may be allocated 30kW, the wind turbine-3 may be allocated 20kW, and the wind turbine-4 may be allocated 10kW.

The predicting the wind condition and the allocating and controlling the demanded generation quantity should start after a met mast 210 measures a wind condition and should be completed before the wind arrives at the wind turbine located at the head of the wind farm. Since these operations require high speed computing, it is preferable to design hardware and software to be processed in parallel.

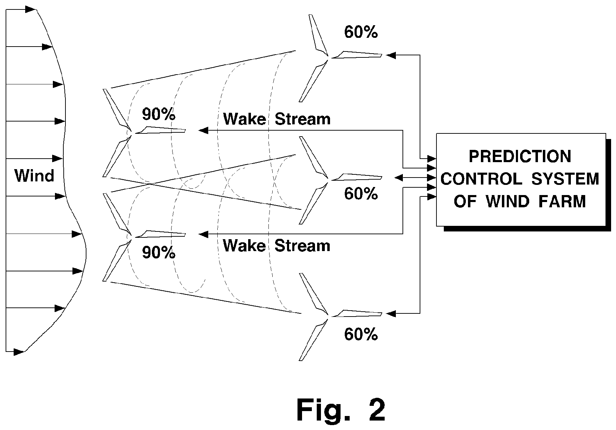

FIG. 2 is a view illustrating a process of predicting a wind condition. In order to predict wind conditions of winds to arrive at wind turbines provided in the wind farm, the prediction control system 100 models a wind field of the wind farm as shown in FIG. 2.

In modeling the wind field, the prediction control system 100 makes an ultra-short-term prediction regarding a wind condition of a wind to arrive at each of the wind turbines on a real time basis by considering a wake effect caused by the wind turbine based on the wind condition measured by the met mast 210.

Since the wind field of the wind farm is influenced by the wake effect, a wind speed or air volume of winds arriving at rear wind turbines may be modeled to be smaller than a wind speed or air volume of winds arriving at front wind turbines as shown in FIG. 2.

In addition, to reflect the wake effect, the locations of wind turbines (ultimately, intervals between the wind turbines) and the orientations of wind turbines (ultimately, angles between the wind turbines) are considered in modeling the wind field.

When the wind condition of each of the wind turbines is predicted, the prediction control system 100 allocates a demanded generation quantity to each of the wind turbines based on the predicted wind condition.

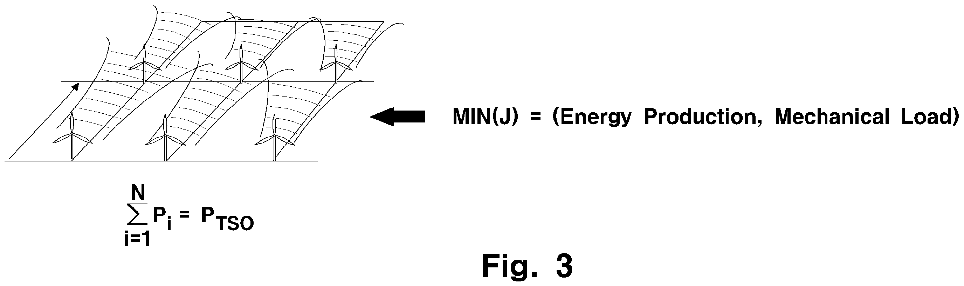

A method for allocating a demanded generation quantity is illustrated in FIG. 3. In FIG. 3, Pᵢ is a demanded generation quantity allocated to each of the wind turbines, and P_{TSO} is a sum of the demanded generation quantities, that is, a total generation quantity demanded of the wind farm.

The demanded generation quantity may be allocated to each of the wind turbines so that a sum of mechanical loads to be applied to the wind turbines can be minimized. The mechanical load to be applied to the wind turbine may be calculated based on the wind condition of the wind to enter the wind turbine and the demanded generation quantity.

Accordingly, when the total generation quantity is to be produced by the wind turbines, the demanded generation quantities of the wind turbines may be determined so that the sum of the mechanical loads of the wind turbines can be minimized.

For example, when the wind turbines-1, 2, 3, 4 produce 40kW, 30kW, 20kW, and 10kW, respectively, the total mechanical load may be 100kJ, and, when the wind turbines produce 30kW, 30kW, 20kW, and 20kW, the total mechanical load may be 90kJ. In this case, the demanded generation quantities of the wind turbines are determined as 30kW, 30kW, 20kW, 20kW.

In addition, when the wind turbines-1, 2, 3, 4 produce 30kW, 20kW, 30kW, 20kW, respectively, the total mechanical load may be 85kJ. In this case, the demanded generation quantity of the wind turbines may be changed to 30kW, 20kW, 30kW, 20kW.

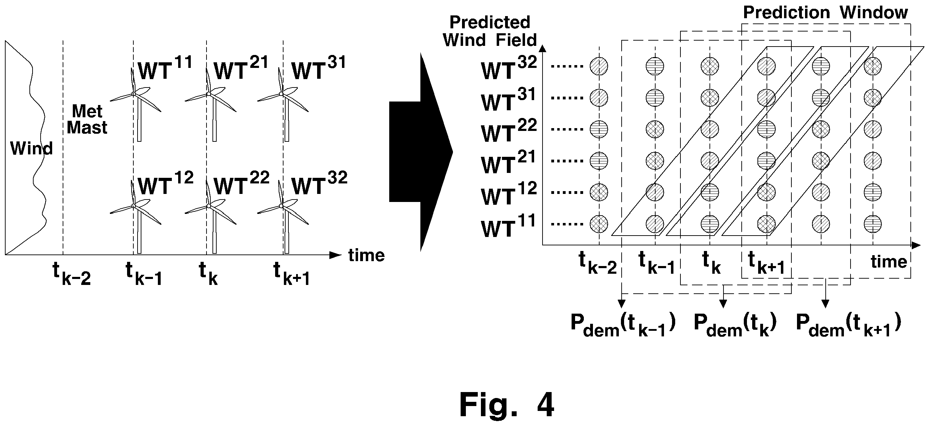

FIG. 4 is a view to illustrate an overall process of predicting a wind condition and allocating a demanded generation quantity. In FIG. 4, a concept of a prediction window is introduced.

The prediction window refers to a section from an area where the wind the condition of which is measured by the met mast 210 enters the wind farm to an area where the wind passing through the wind farm escapes from the wind farm. The prediction window includes winds previously measured in addition to the wind currently measured by the met mast 210. This is to estimate demanded generation quantities and predict mechanical loads for all of the wind turbines provided in the wind farm.

The prediction control system 100 may predict the wind condition and the mechanical loads regarding all of the wind turbines provided in the wind farm at a real time/in an ultra-short term through the prediction window, and may allocate demanded generation quantities to the wind turbines based on the result of the prediction.

Referring to FIG. 4, 1) the wind entering the wind turbines (WTs) -11, 12 at tₖ is the wind entering the met mast 20 before tₖ, 2) the wind entering the WTs-21, 22 at tₖ is the wind entering the met mast 210 before tₖ₋₁ and then entering the WTs-11, 12 at tₖ₋₁, and 3) the wind entering the WTs-31, 32 at tₖ is the wind entering the met mast 210 before tₖ₋₂, entering the WTs-11, 12 at tₖ₋₂, and then entering WTs-21, 22 at tₖ₋₁.

That is, winds to be applied to the wind turbines when the prediction control system 100 allocates the demanded generation quantities to the wind turbines entered the met mast 210 at different times.

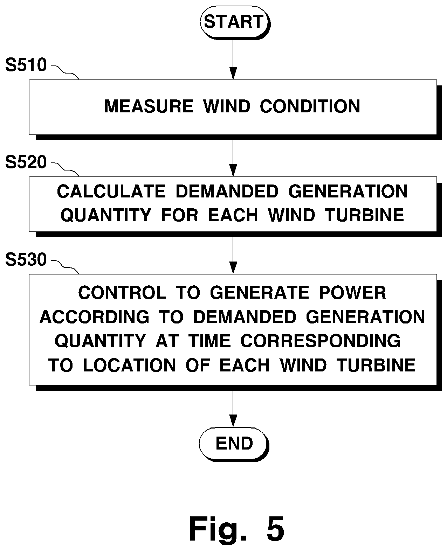

Hereinafter, a method for controlling a wind farm will be explained with reference to FIGS. 5 to 9. FIG. 5 is a flowchart to illustrate a method for controlling a wind farm according to an exemplary embodiment of the present invention.

First, the prediction control system 100 measures a wind condition of a wind to enter a wind farm including a plurality of wind turbines (S510). As described above, the prediction control system 100 measures the wind condition of the wind to enter through the met mast 210.

Thereafter, the prediction control system 100 calculates a demanded generation quantity for each of the wind turbines to satisfy a total generation quantity demanded of the wind farm based on the measured wind condition information (S520).

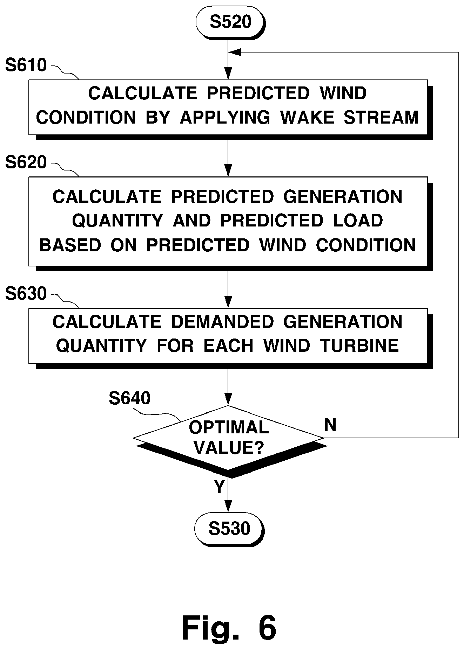

The process of calculating the demanded generation quantity for each of the wind turbines will be explained below in detail with reference to FIG. 6. FIG. 6 is a flowchart to illustrate a process of calculating a demanded generation quantity for each wind turbine according to an exemplary embodiment of the present invention.

To calculate a demanded generation quantity for each of the wind turbines, first, the prediction control system 100 calculates a predicted wind condition of a wind to enter a specific wind turbine from among the plurality of wind turbines by applying wake streams caused by other wind turbines to the measured wind condition information (S610). In this case, the prediction control system 100 calculates a reduction coefficient by considering a wind reduced by at least one wind turbine located ahead of the specific wind turbine. In addition, the prediction control system 100 calculates the predicted wind condition of the wind to enter the specific wind turbine by applying the reduction coefficient to the strength of the measured wind. In this case, when the number of wind turbines located ahead of the specific wind turbine is N, the prediction control system 100 calculates N number of partial reduction coefficients for each of the wind turbines located ahead of the specific wind turbine, and calculates the reduction coefficient for the specific wind turbine by multiplying N number of partial reduction coefficients.

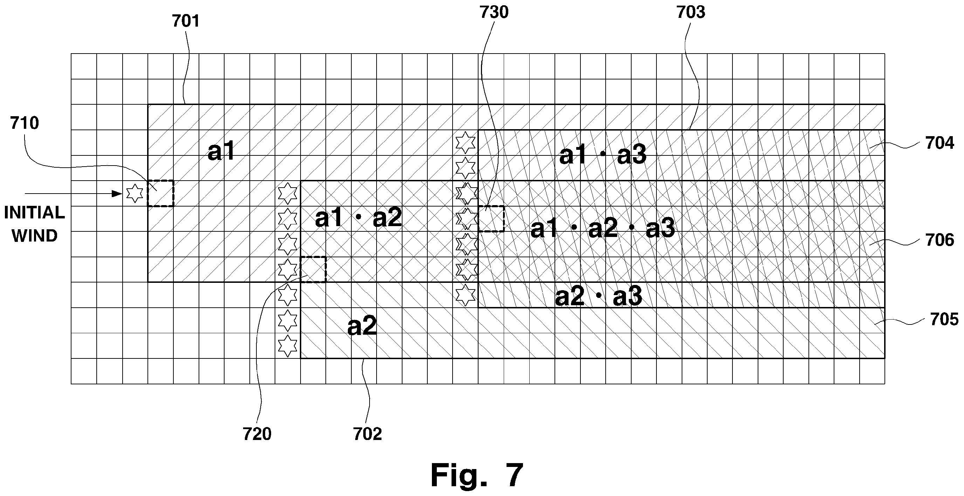

The process of calculating the reduction coefficient will be explained below in detail with reference to FIG. 7. FIG. 7 is a view illustrating a method for calculating a reduction coefficient to apply wake streams according to an exemplary embodiment of the present invention.

In FIG. 7, a first wind turbine 710, a second wind turbine 720, and a third wind turbine 730 are placed. As shown in FIG. 7, areas behind the wind turbines are influenced by the reduction coefficient by the wake stream. In FIG. 7, the reduction coefficient by the first wind turbine 710 is a1, the reduction coefficient by the second wind turbine 720 is a2, and the reduction coefficient by the third wind turbine 730 is a3.

Since a first area 701 is influenced only by the wake stream of the first wind turbine 710, the reduction coefficient of the first area 701 is a1. In addition, since a second area 702 is influenced only by the wake stream of the second wind turbine 720, the reduction coefficient of the second area 702 is a2. In addition, since a third area 703 is influenced by the wake stream of the first wind turbine 710 and the wake stream of the second wind turbine 720 simultaneously, the reduction coefficient of the third area 703 is a1*a2. In addition, since a fourth area 704 is influenced by the wake stream of the first wind turbine 710 and the wake stream of the third wind turbine 730 simultaneously, the reduction coefficient of the fourth area 704 is a1*a3. In addition, since a fifth area 705 is influenced by the wake stream of the second wind turbine 720 and the wake stream of the third wind turbine 730 simultaneously, the reduction coefficient of the fifth area 705 is a2*a3. Finally, since a sixth area 706 is influenced by the wake stream of the first wind turbine 710, the wake stream of the second wind turbine 720, and the wake stream of the third wind turbine 730 simultaneously, the reduction coefficient of the sixth area 706 is a1*a2*a3.

In this method, since the second wind turbine 720 is located in the first area, the reduction coefficient of the second wind turbine 720 is a1. In addition, since the third wind turbine 730 is located in the third area, the reduction coefficient of the third wind turbine 730 is a1 *a2.

In this method, the prediction control system 100 can calculate the reduction coefficient and can calculate the predicted wind condition of the wind to enter the specific wind turbine by applying the reduction coefficient to the strength of the measured wind.

Referring back to FIG. 6, the prediction control system 100 calculates a predicted generation quantity and a predicted load of the specific wind turbine at a time when the wind of the predicted wind condition enters (S620). The predicted load indicates a mechanical load of the specific wind turbine that is generated when power is generated by the wind of the predicted wind condition as described above.

The prediction control system 100 may perform the step of calculating the predicted wind condition (S610) and the step of calculating the predicted generation quantity and the predicted load (S620) in parallel for each of the plurality of wind turbines. That is, the prediction control system 100 performs the operations to be performed for each of the plurality of wind turbines not in sequence but in parallel for all of the wind turbines, so that a time required to perform the operations can be reduced.

Thereafter, the prediction control system 100 calculates a demanded generation quantity for each of the wind turbines to satisfy a total generation quantity based on the predicted generation quantity and the predicted load of each of the plurality of wind turbines (S630).

The prediction control system 100 determines whether the demanded generation quantity calculated for each of the wind turbines is an optimal value or not (S640). The optimal value indicates a demanded generation quantity for each of the wind turbines which meets the requirements that a sum of the predicted generation quantities for the plurality of wind turbines should equal to the total generation quantity demanded of the wind farm and a sum of the predicted loads of the plurality of wind turbines should be minimized, based on the predicted generation quantity and the predicted load of each of the plurality of wind turbines. A detailed description of this has been provided above with reference to FIG. 3.

When the demanded generation quantity calculated for each of the wind turbines is not an optimal value (S640-N), the prediction control system 100 resumes step S610 to repeat the above-described processes.

It is possible to limit the number of times the above-described processes are repeated. The number of times the above-described processes are repeated may be limited based on the reduction coefficient by the wake stream of the wind turbines. Specifically, the number of times the above-described processes are repeated may be determined in inverse proportion to a minimum value of the reduction coefficients.

For example, when the minimum reduction coefficient is 0.9, the maximum number of times of repeating is limited to 30 times, and, when the minimum reduction coefficient is 0.8, the maximum number of times of repeating is limited to 40 times. In addition, when the minimum reduction coefficient is 0.7, the maximum number of times of repeating is limited to 50 times.

As the minimum reduction coefficient decreases, it is difficult to calculate the optimal value and thus the number of times of repeating increases.

When the demanded generation quantity calculated for each of the wind turbines is an optimal value (S640-Y), the prediction control system 100 performs step S530.

That is, the prediction control system 100 controls each of the wind turbines to generate power according to the demanded generation quantity calculated for each of the wind turbines at a time corresponding to a location of each of the wind turbines (S530). As described above with reference to FIG. 4, the time to apply the demanded generation quantity to the wind turbine is different according to the location of the wind turbine. Therefore, the prediction control system 100 may control each of the wind turbines to generate power according to the demanded generation quantity calculated for each of the wind turbines at the time corresponding to the location of each of the wind turbines.

Specifically, the prediction control system 100 calculates a time when the measured wind arrives at each of the wind turbines. In this case, the prediction control system 100 may calculate the time when the measured wind arrives at each of the wind turbines by using a distance between a point where the measuring is performed and a location of a target wind turbine, a wind speed of the measured wind, a wind speed of the wind at the target wind turbine, and a measuring time of the wind. In addition, the prediction control system 100 controls each of the wind turbines to generate power according to the demanded generation quantity calculated for each of the wind turbines at the time calculated for each of the wind turbines.

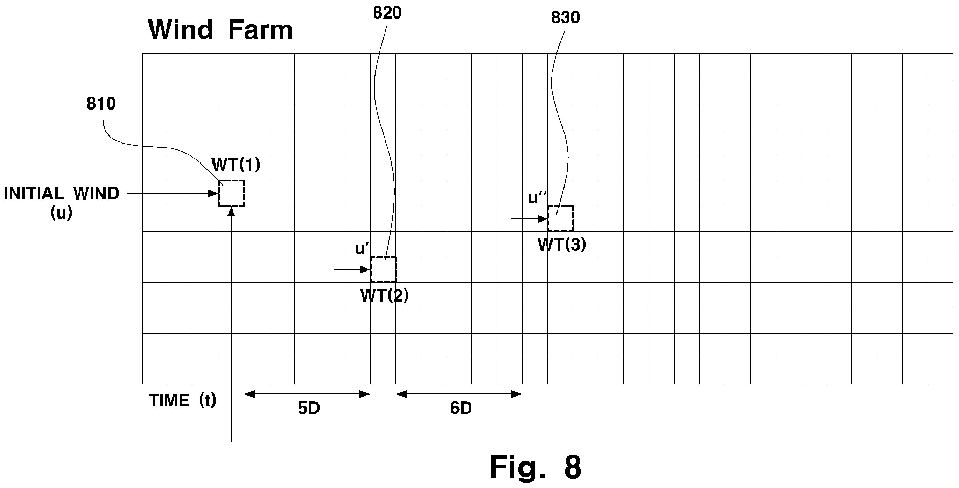

The method for calculating the time corresponding to the location of the wind turbine as described above will be explained in detail with reference to FIGS. 8 to 10. FIG. 8 is a view to illustrate a method for calculating a time corresponding to a location of a wind turbine according to an exemplary embodiment of the present invention.

In FIG. 8, a first wind turbine (WT (1)) 810, a second wind turbine (WT (2)) 820, and a third wind turbine (WT (3)) 830 are illustrated. In addition, a distance between the first wind turbine 810 and the second wind turbine 820 is 5D (=500 m), and a distance between the second wind turbine 820 and the third wind turbine 830 is 6D (=600 m).

In this situation, when an initial wind (u) entering the first wind turbine 810 is 10 m/s and a wind (u') entering the second wind turbine 820 is 9 m/s, the time it takes for the wind to go from the first wind turbine 810 to the second wind turbine 820 is 500/((u+u')/2)=52.632 seconds. Accordingly, the same wind as the wind entering the first wind turbine 810 enters the second wind turbine 820 about 52 seconds after escaping from the first wind turbine 810. Accordingly, the time to apply the demanded generation quantity to the second wind turbine 820 is about 52 seconds later than the time to apply the demanded generation quantity to the first wind turbine 810.

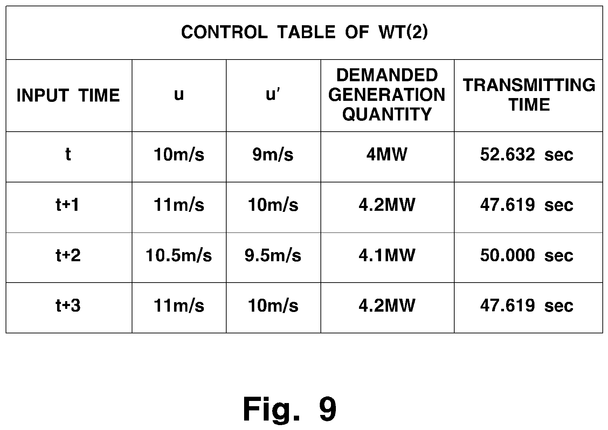

Accordingly, a control table of the second wind turbine 820 records a transmitting time and the prediction control system 100 applies the demanded generation quantity at the time corresponding to the input time plus the transmitting time as shown in FIG. 9. FIG. 9 is a view illustrating an example of a control table of a specific wind turbine according to an exemplary embodiment of the present invention.

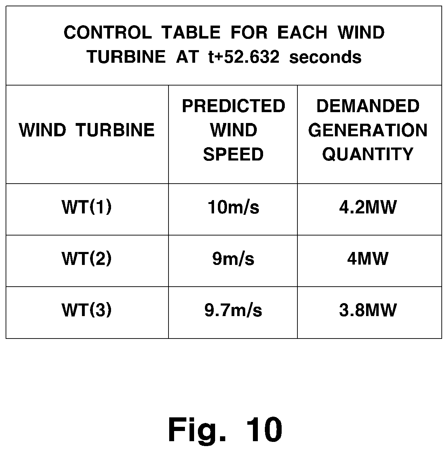

In addition, FIG. 10 is a view illustrating an example of a control table for each of the wind turbines at a specific time according to an exemplary embodiment of the present invention. As shown in FIG. 10, the prediction control system 100 manages a table regarding a predicted wind speed and a demanded generation quantity for each of the wind turbines each time the wind arrives at each of the wind turbines. FIG. 10 illustrates a control table for each of the wind turbines at the time of t+52.632 seconds, and it can be seen from FIG. 10 that the predicted wind speed for the second wind turbine (WT(2)) 820 at the time of t+52.632 seconds is 9 m/s, and the demanded generation quantity is 4 MW.

Through the above-described process, the prediction control system 100 can control each of the wind turbines to generate power according to the demanded generation quantity calculated for each of the wind turbines at the time corresponding to the location of each of the wind turbines. Accordingly, the prediction control system 100 can synchronize each of the plurality of wind turbines with an appropriate time and can allocate the demanded generation quantity to each of the wind turbines.

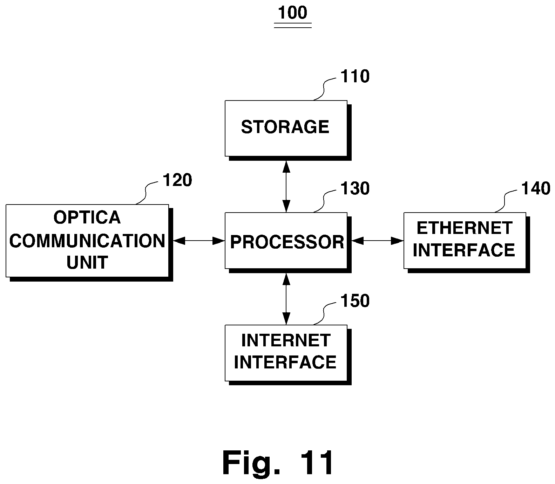

FIG. 11 is a detailed block diagram illustrating the prediction control system 100 of FIG. 1. As shown in FIG. 11, the prediction control system 100 includes a storage 110, an optical communication unit 120, a processor 130, an Ethernet interface 140, and an Internet interface 150.

The storage 110 stores programs and data for predicting the wind condition and allocating and controlling the demanded generation quantity as described above, and the processor 130 models the wind field and allocates and controls the demanded generation quantity based on the result of the prediction of the wind condition by using the programs and the data stored in the storage 110.

The optical communication unit 120 may communicate with the met mast 210 and the wind turbines provided in the wind farm, and may collect the wind condition information measured by the met mast 210 and control the wind turbines. In addition, the optical communication unit 120 receives wind condition information of a wind to enter the wind farm including the plurality of wind turbines.

The Ethernet interface 140 is an interface for accessing a Local Area Network (LAN) in the wind farm and communicating with other terminals, and the Internet interface 150 is an interface for communicating with other terminals located outside the wind farm through the Internet.

The processor 130 may model the wind field, allocate the demanded generation quantity, and control the wind turbines in parallel. Specifically, the most HW/SW resources are allocated to the modeling of the wind field at an early stage, are allocated to the allocating of the demanded generation quantity at a middle stage, and are allocated to the controlling of the wind turbines at a late stage.

For example, when the wind field modeling, the allocating, and the controlling are performed every 90 seconds, 1) 100% of the HW/SW resources may be allocated to the modeling of the wind field from 0 to 30 seconds, 2) 80% of the HW/SW resources may be allocated to the modeling of the wind field and 20% may be allocated to the allocating of the demanded generation quantity from 30 to 40 seconds, 3) 100% of the HW/SW resources may be allocated to the allocating of the demanded generation quantity from 40 to 60 seconds, 4) 80% of HW/SW resources may be allocated to the allocating of the demanded generation quantity and 20% may be allocated to the controlling of the turbine (located at the head of the wind farm) from 60 to 70 seconds, and 5) 100% of the HW/SW resources may be allocated to the controlling of the turbine (located in the middle and rear of the wind farm) from 70 to 90 seconds.

In addition, the processor 130 can calculate a demanded generation quantity for each of the wind turbines to satisfy the total generation quantity based on the measured wind condition information, and can control each of the wind turbines to generate power according to the demanded generation quantity calculated for each of the wind turbines at a time corresponding to a location of each of the wind turbines.

Although the present disclosure has been described with an exemplary embodiment, various changes and modifications may be suggested to one skilled in the art. It is intended that the present disclosure encompass such changes and modifications as fall within the scope of the appended claims.

## Claims

1. A method for controlling a wind farm comprising a plurality of wind turbines, the method comprising:
measuring a wind condition of a wind entering the wind farm;
calculating a demanded power generation quantity for each of the wind turbines to satisfy a total power generation quantity demanded of the wind farm based on the measured wind condition; and
calculating a time at which the measured wind condition will arrive at a location of each of the wind turbines; and
controlling each of the wind turbines at the calculated arrival time to generate power according to the demanded power generation quantity calculated for each of the wind turbines;
wherein calculating the time at which the measured wind condition will arrive at the location of each of the wind turbines comprises using a distance between a point where the measuring is performed and a location of a target wind turbine, a wind speed of the measured wind condition, a wind speed at the location of the target wind turbine and a measuring time of the wind; and
wherein calculating the demanded power generation quantity for each of the wind turbines further comprises: calculating a predicted power generation quantity and a predicted load of each of the wind turbines based on the measured wind condition; and calculating the demanded power generation quantity for each of the wind turbines to satisfy the total power generation quantity demanded of the wind farm based on the predicted generation power quantity and the predicted load of each of the wind turbines; and
wherein calculating the predicted power generation quantity and the predicted load comprises: regarding a specific wind turbine from among the plurality of wind turbines, calculating a predicted wind condition of a wind entering the specific wind turbine by calculating wake streams caused by other wind turbines and applying the wake streams to the measured wind condition; and calculating the predicted power generation quantity and the predicted load of the specific wind turbine at a time at which the predicted wind condition will arrive at the specific wind turbine; and
wherein calculating the predicted wind condition, the predicted power generation quantity and the predicted load are performed in parallel for each of the plurality of wind turbines; and
wherein calculating the predicted wind condition further comprises: calculating a reduction coefficient by considering a wind reduced by at least one wind turbine located ahead of the specific wind turbine; and calculating the predicted wind condition of the wind entering the specific wind turbine by applying the reduction coefficient to a strength of the measured wind condition.

2. A wind farm control system comprising:
a communication unit configured to receive a measured wind condition of a wind entering a wind farm comprising a plurality of wind turbines; and
a processor configured to calculate a demanded power generation quantity for each of the wind turbines to satisfy a total power generation quantity demanded of the wind farm based on the measured wind condition and a time at which the measured wind condition will arrive at a location of each of the wind turbines and to control each of the wind turbines at the calculated arrival time to generate power according to the demanded power generation quantity calculated for each of the wind turbines;
wherein the processor is configured to calculate the time at which the measured wind condition will arrive at the location of each of the wind turbines by using a distance between a point where the measuring is performed and a location of a target wind turbine, a wind speed of the measured wind condition, a wind speed at the location of the target wind turbine and a measuring time of the wind; and
wherein the processor is configured to calculate the demanded power generation quantity for each of the wind turbines by calculating a predicted power generation quantity and a predicted load of each of the wind turbines based on the measured wind condition; and by calculating the demanded power generation quantity for each of the wind turbines to satisfy the total power generation quantity demanded of the wind farm based on the predicted generation power quantity and the predicted load of each of the wind turbines; and
wherein the processor is configured to calculate the predicted power generation quantity and the predicted load by regarding a specific wind turbine from among the plurality of wind turbines, calculating a predicted wind condition of a wind entering the specific wind turbine by calculating wake streams caused by other wind turbines and applying the wake streams to the measured wind condition; and by calculating the predicted power generation quantity and the predicted load of the specific wind turbine at a time at which the predicted wind condition will arrive at the specific wind turbine; and
wherein the processor is configured to perform the calculation of the predicted wind condition, the predicted power generation quantity and the predicted load in parallel for each of the plurality of wind turbines; and
wherein the processor is further configured to calculate the predicted wind condition by calculating a reduction coefficient by considering a wind reduced by at least one wind turbine located ahead of the specific wind turbine; and by calculating the predicted wind condition of the wind entering the specific wind turbine by applying the reduction coefficient to a strength of the measured wind condition.

## Patentansprüche

1. Verfahren zum Steuern eines eine Vielzahl von Windturbinen umfassenden Windparks, wobei das Verfahren Folgendes umfasst:
Messen eines Windzustands eines in den Windpark eintretenden Winds;
Berechnen einer geforderten Leistungserzeugungsmenge für jede der Windturbinen, basierend auf dem gemessenen Windzustand, um eine von dem Windpark geforderte Gesamtleistungserzeugungsmenge zu erfüllen; und
Berechnen einer Zeit, zu der der gemessene Windzustand an einem Standort jeder der Windturbinen eintreffen wird; und
Steuern jeder der Windturbinen zu der berechneten Eintreffzeit, um Leistung gemäß der für jede der Windturbinen berechneten geforderten Leistungserzeugungsmenge zu erzeugen;
wobei das Berechnen der Zeit, zu der der gemessene Windzustand am Standort von jeder der Windturbinen eintreffen wird, das Verwenden einer Entfernung zwischen einem Punkt, an dem die Messung ausgeführt wird, und einem Standort einer Zielwindturbine, einer Windgeschwindigkeit des gemessenen Windzustands, einer Windgeschwindigkeit am Standort der Zielwindturbine und einer Messzeit des Winds umfasst; und
wobei das Berechnen der geforderten Leistungserzeugungsmenge für jede der Windturbinen weiter Folgendes umfasst: Berechnen einer vorausgesagten Leistungserzeugungsmenge und einer vorausgesagten Last für jede der Windturbinen, basierend auf dem gemessenen Windzustand; und Berechnen der geforderten Leistungserzeugungsmenge für jede der Windturbinen, basierend auf der vorausgesagten Leistungserzeugungsmenge und der vorausgesagten Last jeder der Windturbinen, um die von dem Windpark geforderte Gesamtleistungserzeugungsmenge zu erfüllen; und
wobei das Berechnen der vorausgesagten Leistungserzeugungsmenge und der vorausgesagten Last Folgendes umfasst: Betrachten einer bestimmten Windturbine aus der Vielzahl von Windturbinen, Berechnen eines vorausgesagten Windzustands eines in die bestimmte Windturbine eintretenden Winds durch Berechnen von von anderen Windturbinen verursachten Nachströmen und Anwenden der Nachströme auf den gemessenen Windzustand; und Berechnen der vorausgesagten Leistungserzeugungsmenge und der vorausgesagten Last der bestimmten Windturbine zu einer Zeit, zu der der vorausgesagte Windzustand an der bestimmten Windturbine eintreffen wird; und
wobei das Berechnen des vorausgesagten Windzustands, der vorausgesagten Leistungserzeugungsmenge und der vorausgesagten Last für jede der Vielzahl von Windturbinen parallel ausgeführt werden; und
wobei das Berechnen des vorausgesagten Windzustands weiter Folgendes umfasst: Berechnen eines Abschwächungskoeffizienten durch Betrachten eines von mindestens einer vor der bestimmten Windturbine gelegenen Windturbine abgeschwächten Winds; und Berechnen des vorausgesagten Windzustands des in die bestimmte Windturbine eintretenden Winds durch Anwenden des Abschwächungskoeffizienten auf eine Stärke des gemessenen Windzustands.

2. Windpark-Steuerungssystem, das Folgendes umfasst:
eine Kommunikationseinheit, die dazu konfiguriert ist, einen gemessenen Windzustand eines in einen Windpark, der eine Vielzahl von Windturbinen umfasst, eintretenden Winds zu empfangen; und
einen Prozessor, der dazu konfiguriert ist, eine geforderte Leistungserzeugungsmenge für jede der Windturbinen basierend auf dem gemessenen Windzustand und einer Zeit, zu der der gemessene Windzustand an einem Standort jeder der Windturbinen eintreffen wird, zu berechnen, um eine von dem Windpark geforderte Gesamtleistungserzeugungsmenge zu erfüllen und jede der Windturbinen zu der berechneten Eintreffzeit dazu zu steuern, Leistung gemäß der für jede der Windturbinen berechneten geforderten Leistungserzeugungsmenge zu erzeugen;
wobei der Prozessor dazu konfiguriert ist, die Zeit, zu der der gemessene Windzustand am Standort jeder der Windturbinen eintreffen wird, zu berechnen, indem er eine Entfernung zwischen einem Punkt, an dem die Messung ausgeführt wird, und einem Standort einer Zielwindturbine, eine Windgeschwindigkeit des gemessenen Windzustands, eine Windgeschwindigkeit am Standort der Zielwindturbine und eine Messzeit des Winds verwendet; und
wobei der Prozessor dazu konfiguriert ist, die geforderte Leistungserzeugungsmenge für jede der Windturbinen zu berechnen, indem er eine vorausgesagte Leistungserzeugungsmenge und eine vorausgesagte Last jeder der Windturbinen basierend auf dem gemessenen Windzustand berechnet; und indem er die geforderte Leistungserzeugungsmenge für jede der Windturbinen, um die von dem Windpark geforderte Gesamtleistungserzeugungsmenge zu erfüllen, basierend auf der vorausgesagten Leistungserzeugungsmenge und der vorausgesagten Last jeder der Windturbinen berechnet; und
wobei der Prozessor dazu konfiguriert ist, die vorausgesagte Leistungserzeugungsmenge und die vorausgesagte Last zu berechnen, indem er eine bestimmte Windturbine aus der Vielzahl von Windturbinen betrachtet, einen vorausgesagten Windzustand eines in die bestimme Windturbine eintretenden Winds berechnet, indem er von anderen Windturbinen verursachte Nachströme berechnet und die Nachströme auf den gemessenen Windzustand anwendet; und indem er die vorausgesagte Leistungserzeugungsmenge und die vorausgesagte Last der bestimmten Windturbine zu einer Zeit, zu der der vorausgesagte Windzustand an der bestimmten Windturbine eintreffen wird, berechnet; und
wobei der Prozessor dazu konfiguriert ist, die Berechnung des vorausgesagten Windzustands, der vorausgesagten Leistungserzeugungsmenge und der vorausgesagten Last für jede der Vielzahl von Windturbinen parallel auszuführen; und
wobei der Prozessor weiter dazu konfiguriert ist, den vorausgesagten Windzustand zu berechnen, indem er einen Abschwächungskoeffizienten berechnet, indem er einen von mindestens einer vor der bestimmten Windturbine gelegenen Windturbine abgeschwächten Wind betrachtet; und indem er den vorausgesagten Windzustand des in die bestimmte Windturbine eintretenden Winds berechnet, indem er den Abschwächungskoeffizienten auf eine Stärke des gemessenen Windzustands anwendet.

## Revendications

1. Procédé destiné à commander une ferme éolienne comprenant une pluralité de turbines éoliennes, le procédé comprenant les opérations consistant à :
mesurer une condition de vent pour un vent entrant dans la ferme éolienne ;
calculer une quantité de génération d'énergie demandée pour chacune des turbines éoliennes afin de satisfaire à une quantité de génération d'énergie totale demandée à la ferme éolienne, sur la base de la condition de vent mesurée ; et
calculer un horaire auquel la condition de vent mesurée va arriver à un emplacement de chacune des turbines éoliennes ; et
commander chacune des turbines éoliennes à l'horaire d'arrivée calculé afin de générer de l'énergie en fonction de la quantité de génération d'énergie demandée ayant été calculée pour chacune des turbines éoliennes ;
cas dans lequel le calcul de l'horaire auquel la condition de vent mesurée va arriver à l'emplacement de chacune des turbines éoliennes comprend l'utilisation d'une distance entre un point où la mesure est réalisée et un emplacement d'une turbine éolienne cible, d'une vitesse de vent de la condition de vent mesurée, d'une vitesse de vent à l'emplacement de la turbine éolienne cible et d'un horaire de mesure du vent ; et
cas dans lequel le calcul de la quantité de génération d'énergie demandée pour chacune des turbines éoliennes comprend en outre : le calcul d'une quantité de génération d'énergie prévue et d'une charge prévue de chacune des turbines éoliennes sur la base de la condition de vent mesurée ; et le calcul de la quantité de génération d'énergie demandée pour chacune des turbines éoliennes afin de satisfaire à une quantité de génération d'énergie totale demandée à la ferme éolienne, sur la base de la quantité d'énergie de génération prévue et de la charge prévue de chacune des turbines éoliennes ; et
cas dans lequel le calcul de la quantité de génération d'énergie prévue et de la charge prévue comprend :
l'observation d'une turbine éolienne spécifique parmi la pluralité de turbines éoliennes, le calcul d'une condition de vent prévue pour un vent entrant dans la turbine éolienne spécifique grâce au calcul de flux d'éveil causés par d'autres turbines éoliennes et l'application des flux d'éveil à la condition de vent mesurée ; et le calcul de la quantité de génération d'énergie prévue et de la charge prévue de la turbine éolienne spécifique à un horaire auquel la condition de vent prévue va arriver sur la turbine éolienne spécifique ; et
cas dans lequel le calcul de la condition de vent prévue, de la quantité de génération d'énergie prévue et de la charge prévue sont réalisées en parallèle pour chaque turbine éolienne parmi la pluralité de turbines éoliennes ; et
cas dans lequel le calcul de la condition de vent prévue comprend en outre : le calcul d'un coefficient de réduction en considérant un vent qui a été réduit par au moins une turbine éolienne située devant la turbine éolienne spécifique ; et le calcul de la condition de vent prévue pour le vent entrant dans la turbine éolienne spécifique grâce à l'application du coefficient de réduction à une intensité de la condition de vent mesurée.

2. Système de commande de ferme éolienne comprenant :
une unité de communication configurée de façon à recevoir une condition de vent mesurée pour un vent entrant dans une ferme éolienne comprenant une pluralité de turbines éoliennes ; et
un processeur configuré de façon à calculer une quantité de génération d'énergie demandée pour chacune des turbines éoliennes afin de satisfaire à une quantité de génération d'énergie totale demandée à la ferme éolienne, sur la base de la condition de vent mesurée et d'un horaire auquel la condition de vent mesurée va arriver à un emplacement de chacune des turbines éoliennes, et à commander chacune des turbines éoliennes à l'horaire d'arrivée calculé afin de générer de l'énergie en fonction de la quantité de génération d'énergie demandée ayant été calculée pour chacune des turbines éoliennes ;
cas dans lequel le processeur est configuré de façon à calculer l'horaire auquel la condition de vent mesurée va arriver à l'emplacement de chacune des turbines éoliennes grâce à l'utilisation d'une distance entre un point où la mesure est réalisée et un emplacement d'une turbine éolienne cible, d'une vitesse de vent de la condition de vent mesurée, d'une vitesse de vent à l'emplacement de la turbine éolienne cible et d'un horaire de mesure du vent ; et
cas dans lequel le processeur est configuré de façon à calculer la quantité de génération d'énergie demandée pour chacune des turbines éoliennes grâce au calcul d'une quantité de génération d'énergie prévue et d'une charge prévue de chacune des turbines éoliennes sur la base de la condition de vent mesurée ; et grâce au calcul de la quantité de génération d'énergie demandée pour chacune des turbines éoliennes afin de satisfaire à la quantité de génération d'énergie totale demandée à la ferme éolienne, sur la base de la quantité d'énergie de génération prévue et de la charge prévue de chacune des turbines éoliennes ; et
cas dans lequel le processeur est configuré de façon à calculer la quantité de génération d'énergie prévue et la charge prévue grâce à l'observation d'une turbine éolienne spécifique parmi la pluralité de turbines éoliennes, grâce au calcul d'une condition de vent prévue pour un vent entrant dans la turbine éolienne spécifique grâce au calcul de flux d'éveil causés par d'autres turbines éoliennes et l'application des flux d'éveil à la condition de vent mesurée ; et grâce au calcul de la quantité de génération d'énergie prévue et de la charge prévue de la turbine éolienne spécifique à un horaire auquel la condition de vent prévue va arriver sur la turbine éolienne spécifique ; et
cas dans lequel le processeur est configuré de façon à réaliser le calcul de la condition de vent prévue, de la quantité de génération d'énergie prévue et de la charge prévue en parallèle pour chaque turbine éolienne parmi la pluralité de turbines éoliennes ; et
cas dans lequel le processeur est configuré en outre de façon à calculer la condition de vent prévue grâce au calcul d'un coefficient de réduction en considérant un vent qui a été réduit par au moins une turbine éolienne située devant la turbine éolienne spécifique ; et grâce au calcul de la condition de vent prévue pour le vent entrant dans la turbine éolienne spécifique grâce à l'application du coefficient de réduction à une intensité de la condition de vent mesurée.
